# EUROPEAN PATENT SPECIFICATION

(11) **EP 0 358 103 B1**
(45) Date of publication and mention of the grant of the patent: **15.12.1993**
(21) Application number: 89116058.2
(22) Date of filing: 31.08.1989
(51) Int. Cl.: C08F 4/64, C08F 36/02, C08F 32/00

(54) **Method for the preparation of a polymer**
Verfahren zur Herstellung eines Polymers
Méthode pour préparer un polymère

(30) Priority: 05.09.1988 JP 220350/88
(43) Date of publication of application: 14.03.1990
(73) Proprietor: IDEMITSU KOSAN COMPANY LIMITED, Tokyo 100 (JP)
(72) Inventor: Aiura, Hideki Idemitsu Kosan Company Limited, Kimitsu-gun Chiba-ken (JP); Matsumoto, Junichi Idemitsu Kosan Company Limited, Kimitsu-gun Chiba-ken (JP); Asahi, Satoshi Idemitsu Kosan Company Limited, Kimitsu-gun Chiba-ken (JP)
(74) Representative: Türk, Gille, Hrabal, Leifert

(56) References cited:
- EP-A- 0 192 529
- EP-A- 0 273 654
- EP-A- 0 275 676
- DATABASE CHEMICAL ABSTRACTS, (HOST:STN), no. 81(6), 1973, abstract no. 26958r, Columbus, Ohio, US
- CHEMICAL PATENTS INDEX, BASIC ABSTRACTS JOURNAL, section A, no. 8646, 14th January 1987, Derwent Publications Ltd, London, GB

## Description

### BACKGROUND OF THE INVENTION

The present invention relates to a method for the preparation of a polymer or, more particularly, to a method for the preparation of a homopolymer of dienes in a high yield.

Various methods have been proposed in the prior art for the polymerization of a diene monomer or cyclic olefin monomer. For example, a method is disclosed in Journal of Polymer Science, volume A2, pages 1549-1566 (1964), according to which 1,5-hexadiene is polymerized using a combination of titanium tetrachloride and triethyl aluminum as the catalyst. This method is not quite satisfactory because the yield of the polymer is only 58 g per g of the titanium ingredient in the catalyst indicating the relatively low catalytic activity.

Yuki Gosei Kagaku (Organic Synthetic Chemistry), volume 22, (1), pages 71-74 (1964) describes polymerization of norbornene and norbornadiene by using a Ziegler-Natta catalyst but the catalytic activity here is also not high enough.

As to the polymerization of a cyclic unsaturated compound, Organometallics, volume 1982 (1), pages 415-417 describes cationic polymerization of the monomer by using a palladium complex as the catalyst but the yield of the polymer is only 8 g per m mole of the catalyst. Further, Journal of American Chemical Society, volume 82, pages 2337-2340 (1960) describes polymerization of norbornene by using a TiCl₄/LiAlH₄-based catalyst to give the polymer in a yield of 13 g per g of the titanium ingredient. At any rate, these prior art methods are unsatisfactory from the practical standpoint in respect of the low activity of the catalyst.

### SUMMARY OF THE INVENTION

The present invention accordingly has an object to provide a method for the preparation of a homopolymer of dienes in a high yield under mild polymerization conditions.

Thus, the method of the invention for the preparation of a homopolymer of dienes which comprises polymerizing a diene compound in the presence of a catalyst system comprising:
(A) a transition metal compound represented by the general formula

   R¹ₘMX¹₄₋ₘ (I)

   in which M is an atom of a transition metal element selected from the group consisting of titanium, zirconium and hafnium, R¹ is a hydrogen atom or a monovalent hydrocarbon group selected from the class consisting of alkyl groups having from 1 to 20 carbon atoms, aryl groups having from 6 to 20 carbon atoms, aralkyl groups having from 7 to 20 carbon atoms, alkenyl groups having from 2 to 20 carbon atoms, cyclopentadienyl group, and alkyl-substituted cyclopentadienyl groups having 6 to 20 carbon atoms, X¹ is a halogen atom or an alkoxy group having from 1 to 20 carbon atoms and the subscript m is zero or a positive integer of 1 to 4; and
(B) an aluminoxane compound, wherein the ratio of the amount of the catalytic ingredient (B) to the amount of the catalytic ingredient (A) is in the range of from 50 to 2,000 calculated as the number of the atoms of the metallic element in each of the ingredients.

### BRIEF DESCRIPTION OF THE DRAWING

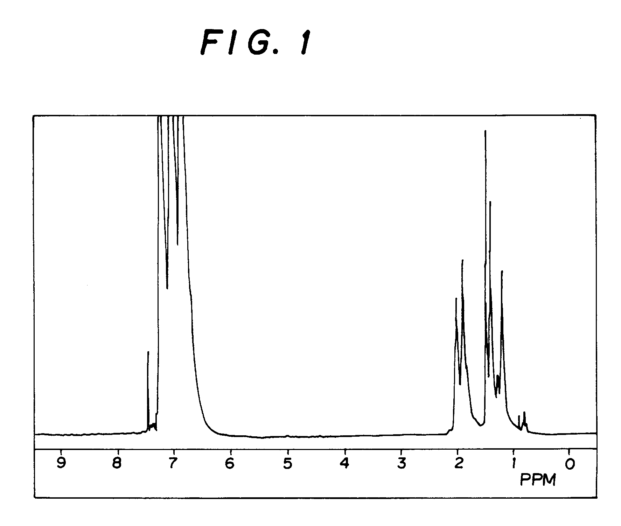

Fig. 1 shows the nuclear magnetic resonance (¹H-NMR) spectrum (based on tetramethyl silane) of the polymer obtained in Example 4 of the present invention.

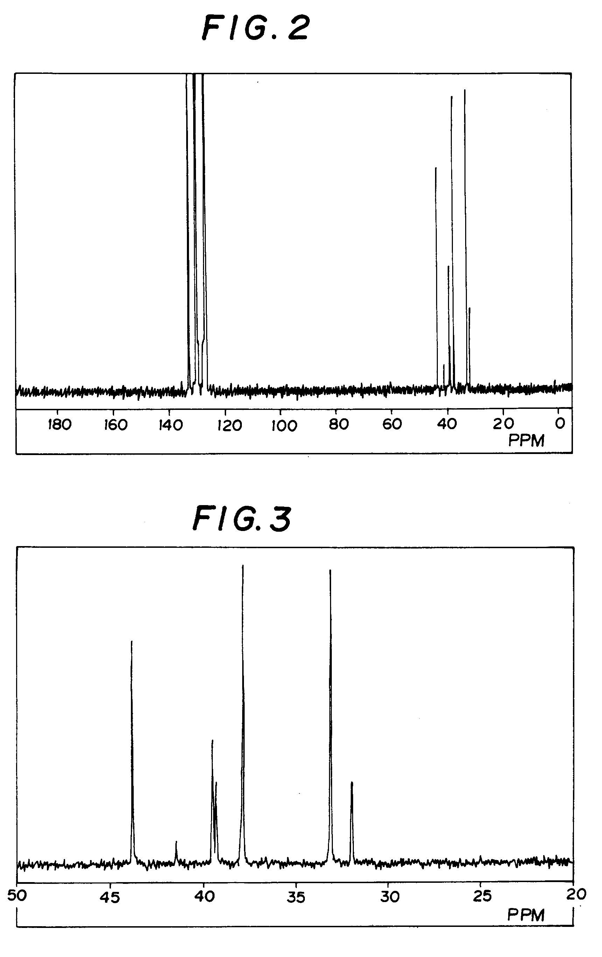

Further, Fig. 2 shows the nuclear magnetic resonance (¹³C-NMR) spectrum (based on tetrametyle silane) of the polymer obtained in Example 4 of the present invention, and Fig. 3 is a partially enlarged view of Fig. 2.

### DETAILED DESCRIPTION OF THE PREFERRED EMBODIMENTS

As is described above, the method of the present invention is applicable to the homopolymerization of diene compounds including non-conjugated cyclic diene compounds, conjugated cyclic diene compounds, non-conjugated linear diene compounds and conjugated linear diene compounds. The diene compounds include: butadiene; 1,3-pentadiene; 1,4-pentadiene; isoprene; 1,3-hexadiene; 1,4-hexadiene; 1,5-hexadiene; methyl pentadiene; heptadiene; octadiene; norbornadiene; 7-methyl-2,5-norbornadiene; 7-ethyl-2,5-norbornadiene; 7-propyl-2,5-norbornadiene; 7-butyl-2,5-norbornadiene; 7-pentyl-2,5-norbornadiene; 7-hexyl-2,5-norbornadiene; 7,7-dimethyl-2,5-norbornadiene; 7-methyl-7-ethyl-2,5-norbornadiene; 7-chloro-2,5-norbornadiene; 7-bromo-2,5-norbornadiene; 7-fluoro-2,5-norbornadiene; 7,7-dichloro-2,5-norbornadiene; 1-methyl-2,5-norbornadiene; 1-ethyl-2,5-norbornadiene; 1-propyl-2,5-norbornadiene; 1-butyl-2,5-norbornadiene; 1-chloro-2,5-norbornadiene; 1-bromo-2,5-norbornadiene; 2-methyl-2,5-norbornadiene; 2-ethyl-2,5-norbornadiene; 2-propyl-2,5-norbornadiene; 2-chloro-2,5-norbornadiene; 2,3-dimethyl-2,5-norbornadiene; 2,5-dimethyl-2,5-norbornadiene; 2,5-dibutyl-2,5-norbornadiene; 2,3,5,6-tetramethyl-2,5-norbonadiene;

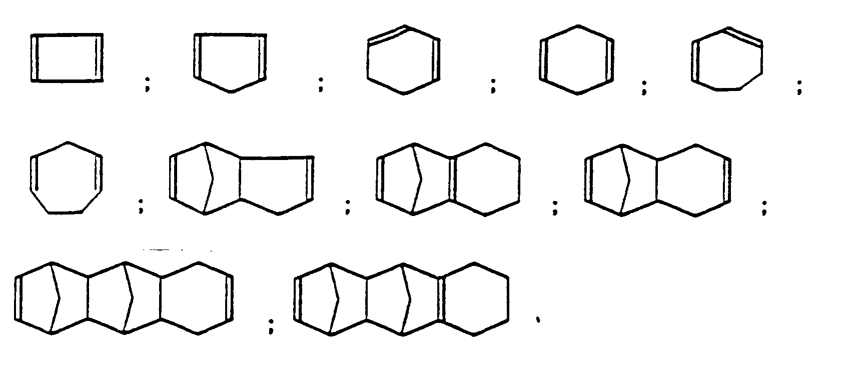

The method of the invention for homopolymerization is performed usually by dissolving the diene compound and the catalyst system in a suitable organic solvent. Examples of suitable organic solvents include aliphatic and aromatic hydrocarbon solvents such as pentane, hexane, heptane, benzene, toluene, and xylene and halogenated hydrocarbon solvents. The concentration of the monomer or monomers dissolved in the solvent is not particularly limitative and can be in the range according to the conventional processes for the polymerization of these monomers.

The catalyst used in the inventive method is a binary system composed of (A) a transition metal ingredient and (B) an aluminoxane ingredient.

The transition metal compound as the first catalytic ingredient is a compound represented by the above given general formula (I), in which each symbol has the definition given above. Particular examples of the transition metal compound, of which the transition metal element is titanium, include: titanium tetrachloride; titanium tetrabromide; tetramethoxy titanium; tetraethoxy titanium; tetra(isopropoxy) titanium; tetra(n-butoxy) titanium; methyl titanium trichloride; ethyl titanium trichloride; methyl titanium trimethoxide; ethyl titanium trimethoxide; cyclopentadienyl titanium trichloride; methyl-substituted cyclopentadienyl titanium trichloride; ehtyl-substituted cyclopentadienyl titanium trichloride; cyclopentadienyl titanium trimethoxide; methyl-substituted cyclopentadienyl titanium trimethoxide; di(cyclopentadienyl) titanium dichloride; bis(methyl-substituted cyclopentadienyl) titanium dichloride; di(cyclopentadienyl)titanium dimethoxide; bis(methyl-substituted cyclopentadienyl) titanium dimethoxide; allyl titanium trichloride; diallyl titanium dichloride; triallyl titanium monochloride; allyl titanium trimethoxide; diallyl titanium dimethoxide, and triallyl titanium methoxide.

Examples of the zirconium and hafnium compounds useful as the catalytic ingredient include those obtained by replacing the titanium atom in the above named titanium compound with an atom of zirconium or hafnium.

A particularly preferable class of the transition metal comounds include those having a cyclopentadienyl group or an alkyl-substituted cyclopentadienyl group as the group denoted by R¹ and a halogen atom or an alkoxy group as the group denoted by X¹.

The aluminoxane compound as the ingredient (B) in the binary catalyst system used in the inventive method is exemplified by methyl aluminoxane, ethyl aluminoxane, and isobutyl aluminoxane obtained by the reaciton of the trialkyl aluminum with water according to a known procedure. For example, an aluminoxane compound can be prepared by dissolving a trialkyl aluminum or a dialkyl aluminum monochloride in an organic solvent such as benzene, toluene, and xylene and admixing the solution with an inorganic salt having water of crystallization such as copper sulfate pentahydrate and aluminum sulfate hexadecahydrate to effect the reaction.

Although the above described aluminoxane compound alone can be used as the catalytic ingredient (B), it is optional that the catalytic ingredient (B) is a combination of the aluminoxane compound and another alkyl aluminum compound such as trimethyl aluminum, triethyl aluminum, tri(isopropyl) aluminum, tributyl aluminum, dimethyl aluminum monochloride, diethyl aluminum monochloride, methyl aluminum sesquichloride, ethyl aluminum sesquichloride, and ethyl aluminum dichloride although it is preferable that the amount of these auxiliary alkyl aluminum compounds does not exceed 50% by moles of the aluminoxane compound calculated as aluminum atoms.

In practicing the method of the invention by using the binary catalyst system consisting of the catalytic ingredient (A) of the transition metal compound and the ingredient (B) of the aluminoxane compound, these catalytic ingredients can be separately added to the reaction mixture or can be added as a mixture prepared in advance. The ratio of the amount of the catalytic ingredient (B) to the amount of the catalytic ingredient (A) in the reaction mixture is in the range from 50 to 2,000 calculated as the number of atoms of the metallic element in each of the ingredients. Though not particularly limitative, the amount of the catalyst in the reaction mixture relative to the monomer or monomers should be in the range from 1 to 100,000,000 or, preferably, in the range from 100 to 100,000 as the ratio of the nuclear of molecules of the monomer or monomers to the number of atoms of the transition metal element.

The polymerization reaction according to the method of the invention can be performed at a temperature in the range from -100°C to +250°C. The pressure and length of time for the reaction are not particularly limitative.

In the following, the method of the invention is described in more detail by way of examples.

### Example 1.

Into a flask of 300 ml capacity were introduced 50 ml of toluene as the solvent and then 10 m moles of a methyl aluminoxane having molecular weight of 840 were added thereto under an atmosphere of argon gas. In the next place, 0.05 m mole of cyclopentadienyl titanium trimethoxide was added to the mixture in the flask as a transition metal compound to prepare a catalyst solution, into which 50 m moles of norbornadiene as the starting material were added to effect the polymerization reaction at room temperature for 1 hour followed by termination of the polymerization reaction by the addition of 100 ml of methyl alcohol.

The thus obtained product was washed with a mixture of hydrochloric acid and methyl alcohol for deashing followed by thorough washing with methyl alcohol and drying at room temperature under reduced pressure to give a white powdery polymer in a yield of 67.9%. This yield corresponded to a catalytic activity to give 1300 g of the produced polymer per g of the transition metal element in the catalyst.

The thus obtained polymer product had an intrinsic viscosity [η] of 0.25 dl/g as determined at 135°C in decahydronaphthalene as the solvent The infrared absorption spectrum of this polymer had a strong absorption band at a wave nuclear of 800 cm⁻¹ which could be assigned to the structural unit expressed by the formula (A) given below. Further, the ¹H-NMR analysis of the polymer gave an absorption at 6.2 ppm assignable to the carbon-carbon double bond while no absorption was noted at 5.3 ppm, which could be assigned to the carbon-carbon double bond in the main chain of the polymeric structure, indicating that the polymer product had a structural unit expressed by the formula (B) given below. 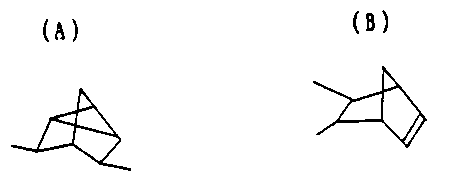
A polymer having the above mentioned specific structural units is reported in Organometallics, volume 1982 (1), pages 415-417 but the polymer disclosed there is insoluble in any organic solvent due to crosslinking. On the contrary, the polymer obtained here was soluble in various solvents including toluene, xylene, chloroform, tetrahydrofuran and the like indicating absence of crosslinks. The polymer also had excellent workability in molding.

### Examples 2 to 9.

The experimental procedure in each of these examples was substantially the same as in Example 1 described above except that the norbornadiene as the starting monomer was replaced with one of the monomers indicated in Table 1 below and the cyclopentadienyl titanium trimethoxide was replaced with one of the other transition metal compounds indicated in the same table as the catalytic ingredient (A), the catalytic ingredient (B) being the same aluminoxane compound as used in Example 1. Table 1 summarizes the yield of the polymer in % and the catalytic activity of the catalyst given by the yield of the polymer in g per g of the transition metal element in the catalyst. The table also includes the results obtained in Example 1.

In addition, the analysis result of the polymer obtained in Example 4 is shown below.

Fig. 1 shows the nuclear magnetic resonance (¹H-NMR) spectrum (based on tetramethyl silane) of the polymer obtained in Example 4 of the present invention:
Further, Fig. 2 shows the nuclear magnetic resonance (¹³C-NMR) spectrum (based on tetramethyl silane) of the polymer obtained in Example 4 of the present invention, and Fig. 3 is a partially enlarged view of Fig. 2.

In addition, the analysis result of the polymer obtained in Example 4 is shown below.

From this analysis result, no signal was observed around 3 to 6 ppm at ¹H-NMR and around 60 to 120 ppm at ¹³C-NMR. Accordingly, it was found that no double was contained. Moreover, by reversion of the peak around 30 to 45 ppm at ¹³C-NMR, it was found that this was a cyclic polymer having a 5-membered ring structure. Besides, reversion of ¹³C-NMR is as follows. 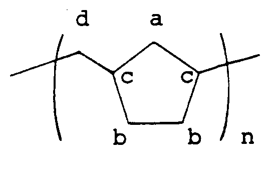
- a:: 43.8 ppm
- b:: 39.4 ppm
- c:: 37.9 ppm
- d:: 33.2 ppm
The polymer obtained in Example 4 had a number average molecular weight (Mn) of 13,000 and a weight average molecular weight (Mw) of 30,000 as determined by gel permeation chromatogram (GPC).

### Comparative Example 1.

The same experimental procedure as in Example 1 was repeated except that the catalyst used here was a combination of 0.05 m mole of cyclopentadienyl titanium trimethoxide and 5 m moles of trimethyl aluminum to give no polymeric product.

**Table 1**

| Example No. | Monomer | Transition metal compound | Yield % | Catalytic activity |
|---|---|---|---|---|
| 1 | Norbornadiene | CpTi(OMe)₃ | 67.9 | 1300 |
| 2 | Norbornadiene | CpTiCl₃ | 55.6 | 1250 |
| 3 | Norbornadiene | TiCl₄ | 44.5 | 1000 |
| 4 | 1,5-Hexadiene | Cp₂ZrCl₂ | 75.6 | 680 |
| 5 | 1,5-Hexadiene | CpHfCl₂ | 71.8 | 650 |
| 6 | 1,5-Hexadiene | Cp₂Hf(OMe)₂ | 68.0 | 610 |
| 7 | 1,3-Cyclohexadiene | CpTiCl₃ | 7.5 | 125 |
| 8 | Butadiene | CpTiCl₃ | 85.2 | 960 |
| 9 | Butadiene | Ti(OEt)₄ | 85.3 | 960 |
| Cp : cyclopentadienyl group Me : methyl group Et : ethyl group | | | | |

## Claims

1. A method for the preparation of a homopolymer of dienes which comprises polymerizing a diene compound in the presence of a catalyst system comprising:
A) a transition metal compound represented by the general formula
R¹ₘMX¹₄₋ₘ
wherein
M is an atom of a transition metal element selected from the group consisting of titanium, zirconium and hafnium,
R¹ is a hydrogen atom or a monovalent hydrocarbon group selected from the class consisting of alkyl groups having from 1 to 20 carbon atoms, aryl groups having from 6 to 20 carbon atoms, aralkyl groups having from 7 to 20 carbon atoms, alkenyl groups having from 2 to 20 carbon atoms, cyclopentadienyl group and alkyl-substituted cyclopentadienyl groups having 6 to 20 carbon atoms,
X¹ is a halogen atom or an alkoxy group having from 1 to 20 carbon atoms and
m is zero or a positive integer of 1 to 4; and
B) an aluminoxane compound wherein
the ratio of the amount of the catalytic ingredient (B) to the amount of the catalytic ingredient (A) is in the range of from 50 to 2,000 calculated as the number of the atoms of the metallic element in each of the ingredients.

2. The method as claimed in claim 1 wherein the polymerization reaction is carried out by dissolving the diene compound and the catalyst system in an organic solvent.

3. The method as claimed in claim 2 wherein the organic solvent is a hydrocarbon solvent or a halogenated hydrocarbon solvent.

4. The method as claimed in any of claims 1 to 3 wherein the group denoted by R¹ is a cyclopentadienyl group or an alkyl-substituted cyclopentadienyl group.

5. The method as claimed in any of claims 1 to 4 wherein the aluminoxane compound is selected from the group consisting of methyl aluminoxanes, ethyl aluminoxanes and isobutyl aluminoxanes.

6. The method as claimed in any of claims 1 to 5 wherein the diene compound is a non-conjugated diene compound.

7. The method as claimed in claim 6 wherein the diene compound is a non-conjugated cyclic diene compound.

8. The method as claimed in claim 6 wherein the diene compound is a non-conjugated linear diene compound.

9. The method as claimed in any of claims 1 to 5 wherein the diene compound is a conjugated cyclic diene compound.

10. The method as claimed in any of claims 1 to 5 wherein the diene compound is a conjugated linear diene compound.

## Patentansprüche

1. Verfahren zur Herstellung eines Homopolymeren von Dienen, das das Polymerisieren einer Dien-Verbindung in Gegenwart eines Katalysator-Systems umfaßt, umfassend:
A) eine Übergangsmetallverbindung, dargestellt durch die allgemeine Formel
R¹ₘMX¹₄₋ₘ
worin
M ein Atom eines Übergangsmetallelements, ausgewählt aus der Gruppe bestehend aus Titan, Zirkon und Hafnium ist,
R¹ ein Wasserstoffatom oder eine monovalente Kohlenwasserstoff-Gruppe, ausgewählt aus der Gruppe bestehend aus Alkyl-Gruppen mit 1 bis 20 Kohlenstoffatomen, Aryl-Gruppen mit 6 bis 20 Kohlenstoffatomen, Aralkyl-Gruppen mit 7 bis 20 Kohlenstoffatomen, Alkenyl-Gruppen mit 2 bis 20 Kohlenstoffatomen, der Cyclopentadienyl-Gruppe und alkyl-substituierten Cyclopentadienyl-Gruppen mit 6 bis 20 Kohlenstoffatomen ist,
X¹ ein Halogenatom oder eine Alkoxy-Gruppe mit 1 bis 20 Kohlenstoffatomen ist und
m gleich Null oder eine positive ganze Zahl von 1 bis 4 ist, und
B) eine Aluminoxan-Verbindung, worin das Verhältnis der Menge des Katalysator-Bestandteils (B) zu der Menge des Katalysator-Bestandteils (A), im Bereich von 50 bis 2 000 liegt, berechnet als die Anzahl der Atome des Metallelements in jedem der Bestandteile.

2. Verfahren nach Anspruch 1, worin die Polymerisationsreaktion durch Auflösen der Dien-Verbindung und des Katalysator-Systems in einem organischen Solvens durchgeführt wird.

3. Verfahren nach Anspruch 2, worin das organische Solvens ein Kohlenwasserstoff-Solvens oder ein halogeniertes Kohlenwasserstoff-Solvens ist.

4. Verfahren nach einem der Ansprüche 1 bis 3, worin die als R¹ bezeichnete Gruppe eine Cyclopentadienyl-Gruppe oder eine alkyl-substituierte Cyclopentadienyl-Gruppe ist.

5. Verfahren nach einem der Ansprüche 1 bis 4, worin die Aluminoxan-Verbindung ausgewählt ist aus der Gruppe bestehend aus Methylaluminoxanen, Ethylaluminoxanen und Isobutylaluminoxanen.

6. Verfahren nach einem der Ansprüche 1 bis 5, worin die Dien-Verbindung eine nichtkonjugierte Dien-Verbindung ist.

7. Verfahren nach Anspruch 6, worin die Dien-Verbindung eine nichtkonjugierte cyclische Dien-Verbindung ist.

8. Verfahren nach Anspruch 6, worin die Dien-Verbindung eine nichtkonjugierte lineare Dien-Verbindung ist.

9. Verfahren nach einem der Ansprüche 1 bis 5, worin die Dien-Verbindung eine konjugierte cyclische Dien-Verbindung ist.

10. Verfahren nach einem der Ansprüche 1 bis 5, worin die Dien-Verbindung eine konjugierte lineare Dien-Verbindung ist.

## Revendications

1. Procédé de préparation d'un homopolymère oléfinique qui consiste à polymériser un composé diénique en présence d'un système catalytique comprenant:
A) un composé d'un métal de transition représenté par la formule générale:
R¹MX¹₄₋ₘ
dans laquelle
M est un atome d'un élément métallique de transition choisi dans le groupe constitué de titanium, zirconium et hafnium,
R¹ est un atome d'hydrogène ou un groupe hydrocarboné monovalent choisi dans la catégorie constituée de groupes alkyles ayant de 1 à 20 atomes de carbone, aryles ayant de 6 à 20 atomes de carbone, aralkyles ayant de 7 à 20 atomes de carbone, alkényles ayant de 2 à 20 atomes de carbone, cyclopentadiényle et cyclopentadiényle substitué par un groupe alkyle ayant de 6 à 20 atomes de carbone,
X¹ est un atome d'halogène ou un groupe alcoxy ayant de 1 à 20 atomes de carbone et
m est égal à zéro ou à un nombre entier positif de 1 à 4; et
B) est un composé aluminoxane dans lequel
le rapport de la quantité du composant catalytique (B) à la quantité du composant catalytique (A) est dans l'intervalle allant de 50 à 2,000 calculé en nombre d'atomes de l'élément métallique présent dans chacun des composants.

2. Procédé tel que revendiqué dans la revendication 1 dans lequel la réaction de polymérisation est conduite par dissolution du composé diénique et du système catalytique dans un solvant organique.

3. Procédé tel que revendiqué dans la revendication 2 dans lequel le solvant est un solvant hydrocarboné ou un solvant hydrocarboné halogéné.

4. Procédé tel que revendiqué dans l'une quelconque des revendications 1 à 3 dans lequel le groupe désigné par R1 est un groupe cyclopentadiényle ou un groupe cyclopentadiényle substitué par un radical alkyle.

5. Procédé tel que revendiqué dans l'une quelconque des revendications 1 à 4 dans lequel le composé aluminoxane est choisi dans le groupe constitué de méthyl aluminoxanes d'éthyl aluminoxanes et d'isobutyl aluminoxanes.

6. Procédé tel que revendiqué dans l'une quelconque des revendications 1 à 5 dans lequel le composé diénique est un composé diénique non conjugué.

7. Procédé tel que revendiqué dans la revendication 6 dans lequel le composé diénique est un composé diénique cyclique non conjugué.

8. Procédé tel que revendiqué dans la revendication 6 dans lequel le composé diénique est un composé diénique linéaire non conjugué.

9. Procédé tel que revendiqué dans l'une quelconque des revendications 1 à 5 dans lequel le composé diénique est un composé diénique cyclique conjugué.

10. Procédé tel que revendiqué dans l'une quelconque des revendications 1 à 5 dans lequel le composé diénique est un composé diénique linéaire conjugué.
